# FASCICULE DE BREVET EUROPEEN

(11) **EP 3 113 620 B1**
(45) Date de publication et mention de la délivrance du brevet: **26.06.2019**
(21) Numéro de dépôt: 15706431.2
(22) Date de dépôt: 19.02.2015
(51) Int. Cl.: A01N 59/16, A01N 43/24, A01N 25/28, A01P 9/00

(54) **PARTICULE MOLLUSCICIDE, APPÂT ET PROCÉDÉ DE LUTTE CONTRE DES MOLLUSQUES NUISIBLES**
MOLLUSKIZIDE PARTIKEL, KÖDER UNDVERFAHREN ZUR BEKÄMPFUNG SCHÄDLICHER MOLLUSKEN
MOLLUSCICIDAL PARTICLE, BAIT AND METHOD FOR CONTROLLING HARMFUL MOLLUSCS

(30) Priorité: 05.03.2014 FR 1451775
(43) Date de publication de la demande: 11.01.2017
(73) Titulaire: De Sangosse, 47480 Pont-du-Casse (FR)
(72) Inventeur: MERCIER, Frédéric, F-47600 Montagnac-sur-Auvignon (FR)
(74) Mandataire: Cabinet BARRE LAFORGUE & associés
(86) Numéro de dépôt international: PCT/EP2015/053510
(87) Numéro de publication internationale: WO 2015/132076

(56) Documents cités:
- WO-A1-97/26789
- WO-A1-99/39576
- US-A- 4 765 979

## Description

L'invention concerne une particule, dite particule molluscicide, de poison par ingestion pour des mollusques nuisibles. L'invention s'étend également à un appât molluscicide comprenant au moins une particule molluscicide, notamment à un appât molluscicide à l'état divisé comprenant des particules molluscicides selon l'invention et à un procédé de lutte contre des mollusques nuisibles dans lequel on utilise de telles particules molluscicides ou un tel appât molluscicide.

Une telle particule et un tel appât molluscicides trouvent des applications industrielles dans le domaine de l'agriculture dans lequel sont recherchées des solutions pour protéger les productions végétales agricoles ou non-agricoles (par exemple les productions ornementales et les jardins d'amateurs) vis-à-vis des ravages occasionnés par des mollusques nuisibles.

On connaît déjà des appâts dédiés à la lutte contre des mollusques nuisibles mis à la disposition des mollusques nuisibles et répartis dans les cultures végétales.

On connait en particulier de WO 99/39576 un appât molluscicide comprenant du phosphate de fer, un agent de stabilisation de cet appât choisi dans le groupe formé de l'acide éthylène diamine di-succinique (EDDS), de ses isomères, de ses sels, des complexes métalliques de l'acide éthylène diamine di-succinique et de leurs mélanges et un matériau comestible pour les mollusques. Selon WO 99/39576, une telle composition peut comprendre un agent molluscicide coactif qui peut être du métaldéhyde.

En pratique, les préparations commerciales à base de phosphate de fer présentent des doses homologuées d'application comprises entre 7 Kg / Ha pour une préparation agricole à base de 3 % de phosphate de fer -soit 100 g de matière active par hectare de culture et 50 Kg/Ha pour une préparation destinée à un usage en jardin d'amateur à base de 1 % de phosphate de fer -soit 500 g de matière active par hectare.

L'invention vise une particule molluscicide permettant de réduire la quantité d'appât à répartir sur des plantes ou des cultures nécessaire pour obtenir une protection des plantes et des cultures vis-à-vis de mollusques -notamment vis-à-vis de mollusques nuisibles-. Elle vise aussi une telle particule molluscicide permettant de réduire la quantité de matière active molluscicide répartie par hectare de culture pour obtenir une telle protection.

L'invention vise une telle particule molluscicide permettant aussi d'améliorer l'efficacité molluscicide de particules de WO 99/39576 vis-à-vis de mollusques nuisibles et comprenant un composé métallique simple, un agent chélatant de stabilisation du composé métallique et, le cas échéant, un agent coactif.

L'invention vise une telle particule molluscicide permettant une telle amélioration de l'efficacité de particules et d'appâts molluscicides pour une quantité réduite de particules ou d'appât ingérée par les mollusques nuisibles.

L'invention vise donc une telle particule de poison, un appât comprenant de telles particules et un tel procédé qui sont actifs sur des mollusques nuisibles tout en étant plus respectueux de l'environnement.

L'invention vise donc à obtenir une efficacité molluscicide améliorée, notamment par rapport à celle des appâts de WO 99/39576. En particulier, l'invention vise à obtenir une efficacité molluscicide améliorée par rapport à l'efficacité d'appâts comprenant de l'ordre de 3 % en masse de phosphate de fer ferrique.

En particulier, l'invention vise à proposer une telle particule molluscicide et un appât molluscicide comprenant au moins une telle particule molluscicide -notamment une pluralité de particules molluscicides- adaptés pour agir rapidement sur des mollusques nuisibles et pour conférer une protection rapide des cultures vis-à-vis desdits mollusques nuisibles.

L'invention vise aussi à proposer une telle particule molluscicide et un appât molluscicide qui soient susceptibles de tuer des mollusques nuisibles plus rapidement -notamment après 3 à 4 jours de consommation de ladite particule- en comparaison avec des particules molluscicides connues. L'invention vise donc à proposer une telle particule molluscicide et un appât molluscicide avec un effet protecteur des plantes et des cultures qui soit rapide.

L'invention vise donc à proposer une telle particule molluscicide et un tel appât molluscicide qui sont consommés par chaque mollusque nuisible en quantité faible mais pour une efficacité de protection des cultures qui reste cependant élevée -voire plus élevée que la protection conférée par des appâts connus comprenant un composé métallique simple, un agent de stabilisation et, le cas échéant, un agent coactif pour la lutte contre des mollusques nuisibles.

L'invention vise en outre à proposer une telle particule molluscicide et un appât molluscicide pour lutter contre des mollusques nuisibles.

L'invention vise en outre à proposer une telle particule molluscicide et un appât molluscicide pour la protection durable et continue de plantes et/ou de cultures végétales vis-à-vis de ces mollusques nuisibles.

L'invention vise également et plus particulièrement à proposer une telle particule molluscicide et un appât molluscicide qui soient compatibles avec les contraintes habituelles de fabrication, de stockage, de conservation et d'application d'appâts connus pour la lutte contre des mollusques nuisibles.

Pour ce faire, l'invention concerne une particule molluscicide selon la revendication 1.

Dans tout le texte, le terme « molluscicide » qualifie la propriété d'une particule selon l'invention, d'une matière solide ou d'un appât de tuer par ingestion des mollusques -notamment des mollusques nuisibles-.

Le métaldéhyde est le composé chimique de CAS (« Chemical Abstracts Service ») n° 108-62-3 et de formule suivante :

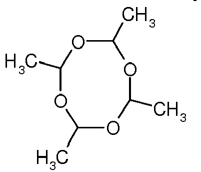

L'invention concerne donc une particule molluscicide (et un appât molluscicide comprenant une telle particule) formée d'une matière solide comprenant au moins un composé métallique et du métaldéhyde répartis dans la matière solide avec un gradient positif de métaldéhyde dirigé vers l'intérieur de la matière solide de façon à présenter une efficacité molluscicide maintenue pour une quantité de matière active consommée qui est réduite. L'invention concerne donc une particule molluscicide d'efficacité améliorée.

Avantageusement et selon l'invention, la proportion du métaldéhyde varie vers l'intérieur de la matière solide, c'est à dire selon au moins une direction normale à la surface de la particule -notamment selon toute direction normale à la surface de la particule- et jusqu'à atteindre une valeur sensiblement invariante à coeur de ladite particule.

Les inventeurs ont observé que le choix du métaldéhyde et la variation de sa proportion vers l'intérieur de la matière solide -c'est-à-dire sa distribution selon un gradient positif vers l'intérieur de la matière solide de la particule permet de diminuer la quantité de matière solide, de particule et d'appât consommée par les mollusques nuisibles pour une efficacité molluscicide au moins conservée.

Dans une particule molluscicide selon l'invention, la distribution du métaldéhyde selon une proportion variable vers l'intérieur de la matière solide permet de limiter la consommation de la matière solide de la particule par des mollusques nuisibles à une partie extérieure de la particule tout en maintenant un effet molluscicide élevé.

Les inventeurs ont constaté que la variation de la proportion de métaldéhyde vers l'intérieur de la matière solide permet de tuer des mollusques nuisibles pour une quantité de matière solide ingérée par lesdits mollusques nuisibles diminuée par rapport à une matière solide conventionnelle -notamment une matière solide présentant une proportion de métaldéhyde constante vers l'intérieur de ladite matière solide.

Les inventeurs ont constaté que la variation de la proportion de métaldéhyde vers l'intérieur de la matière solide entraine un arrêt de la consommation de la particule par tout premier mollusque après l'ingestion d'une fraction seulement de la matière solide et avant la mort dudit premier mollusque, ladite fraction ingérée de matière solide étant létale pour ledit premier mollusque. En outre, il s'avère qu'il est possible de choisir cette répartition pour que l'arrêt de la consommation permette de laisser une fraction résiduelle de matière solide susceptible d'être consommée par au moins un deuxième mollusque (distinct du premier mollusque), ladite fraction résiduelle étant létale pour tout autre mollusque (distinct du premier mollusque) consommant ladite fraction résiduelle.

Avantageusement, la répartition du métaldéhyde dans la matière solide d'une particule selon l'invention est aussi choisie :
- pour entrainer une consommation par ingestion d'une quantité initiale de matière solide par un mollusque, ladite quantité initiale étant létale pour ce mollusque,
- pour induire un arrêt de consommation de la matière solide par le mollusque après ingestion de ladite quantité initiale et avant la mort du mollusque, et ;
- de façon à laisser une quantité résiduelle de matière solide susceptible d'être létale pour tout autre mollusque, distinct dudit premier mollusque, consommant au moins une partie de la quantité résiduelle de matière solide.

Avantageusement, la matière solide est choisie pour que ladite quantité initiale soit létale pour un mollusque nuisible, la mort de ce mollusque nuisible ayant consommé ladite quantité initiale étant différée dans le temps par rapport à la fin de la consommation de matière solide par le mollusque nuisible.

Avantageusement et selon l'invention, la matière solide apte à faire office de poison par ingestion pour des mollusques nuisibles comprend un excipient (aussi nommé support) comestible et attractif pour des mollusques nuisibles. Avantageusement, la matière solide comprend une quantité majoritaire de l'excipient comestible et une quantité minoritaire de métaldéhyde dispersée dans le volume de la matière solide, avec une proportion variable vers l'intérieur de la matière solide.

Avantageusement et selon l'invention, l'excipient comestible est formé d'une préparation choisie dans le groupe formé des farines de céréales -notamment d'une farine de blé dur, d'une farine de blé tendre, d'une farine d'orge, d'une farine de maïs, d'une farine de sorgho-, des co-produits céréaliers, des farines de plantes protéagineuses, des farines de plantes oléagineuses, des farines de tubercules -par exemple de farine de pommes de terre-.

Une particule molluscicide selon l'invention est adaptée pour constituer, dans une phase préalable à l'ingestion et de début d'ingestion d'une partie (surfacique) de la matière solide, un mets attractif et appétissant pour des mollusques nuisibles. Dans la phase d'ingestion par un mollusque, la matière solide ingérée présente une proportion variable augmentée de métaldéhyde au fur et à mesure de l'ingestion de sorte que le mollusque nuisible interrompt l'ingestion de la matière solide puis meurt par l'effet de l'ingestion conjuguée de la quantité de matière solide et du métaldéhyde.

Avantageusement et selon l'invention, la proportion de métaldéhyde varie selon au moins une direction normale à la surface de la particule -notamment selon toute direction normale à la surface de la particule-.

Avantageusement et selon l'invention, dans certains modes de réalisation, la particule peut être une particule en forme de plaquette, de ruban, de granulé de forme sensiblement cubique ou cylindrique de révolution selon une direction principale axiale d'allongement de la particule.

Une particule de forme cylindrique présente une dimension longitudinale (hauteur du cylindre) s'étendant selon la direction axiale d'allongement de la particule et une dimension radiale (diamètre de la section droite transversale de la particule) s'étendant perpendiculairement à la direction axiale. Dans ce mode de réalisation, la hauteur et le diamètre peuvent être de valeurs comparables. Il est aussi possible que la valeur de la hauteur soit supérieure à la valeur du diamètre. Il s'agit alors d'un bâtonnet allongé. Il est cependant aussi possible que la valeur de la longueur soit inférieure à la valeur du diamètre. Il s'agit alors d'une particule de forme discoïde. Il est aussi possible que la section droite transversale (ou base) de la particule soit de forme quelconque, par exemple de forme prismatique, polygonale, tronconique ou autres. Il peut s'agir d'une particule en forme de cylindre à base quelconque, notamment elliptique.

Dans une telle particule de forme cylindrique et formant un granulé selon l'invention, la proportion de métaldéhyde est invariante selon l'axe longitudinal de chaque granulé. Par contre, la proportion de métaldéhyde varie selon l'axe radial vers l'intérieur de la matière solide.

Avantageusement et selon l'invention, dans d'autres modes de réalisation, la particule est de forme sensiblement sphérique et ladite proportion varie selon toute direction radiale vers l'intérieur de la matière solide. Une telle sensiblement sphérique ou parfaitement sphérique présente trois dimensions s'étendant selon trois directions orthogonales entre elles et du même ordre de grandeur et présente une proportion de métaldéhyde variable vers l'intérieur de la matière solide et selon au moins une -notamment selon toute- direction radiale de la particule sphérique jusqu'à atteindre une valeur de proportion sensiblement invariante à coeur de ladite particule sphérique.

Avantageusement et selon l'invention, la particule étant de forme sphérique, la proportion de métaldéhyde varie selon un profil de variation sensiblement identique selon chaque direction radiale. Cependant, rien n'empêche que la proportion de métaldéhyde varie selon un profil de variation différent selon chaque direction radiale vers l'intérieur de la matière solide.

Avantageusement et selon certains modes de réalisation de l'invention, la proportion du métaldéhyde varie -notamment augmente et/ou diminue- de façon continue vers l'intérieur de la matière solide. Dans ces modes de réalisation, le terme « continu(e) » qualifiant la variation de la proportion de métaldéhyde vers l'intérieur de la matière solide s'entend au sens mathématique.

Dans ces modes de réalisation selon l'invention, la proportion de métaldéhyde peut varier selon un taux de variation positif constant (sous forme d'une fonction affine) vers l'intérieur de la matière solide. Dans ces modes de réalisation selon l' invention, la proportion du métaldéhyde varie selon un taux de variation continu.

Cependant, rien n'empêche que la proportion de métaldéhyde varie vers l'intérieur de la matière solide successivement selon une pluralité de segments de fonctions affines distincts. Dans ces modes de réalisation selon l'invention, la proportion du métaldéhyde varie alors selon un taux de variation discontinu.

Dans ces modes de réalisation selon l'invention, rien n'empêche que la proportion de métaldéhyde soit nulle en surface de la matière solide et augmente vers l'intérieur de la matière solide ou encore diminue entre la surface et l'intérieur de la matière solide jusqu'à atteindre une valeur de proportion sensiblement invariante -notamment nulle- à coeur de ladite particule.

Dans ces modes de réalisation selon l'invention, la proportion de métaldéhyde peut varier selon un taux de variation constant (sous forme d'une fonction affine) vers l'intérieur de la matière solide, ou selon un taux de variation mais variable, par exemple sous forme d'une fonction choisie parmi une fonction polynomiale de degré différent de 1, une fonction exponentielle, une fonction logarithmique, une fonction trigonométrique ou autre (fonction de variation aléatoire ou quelconque).

La variation de la proportion de métaldéhyde vers l'intérieur de la matière solide peut être monotone (au sens mathématique du terme), c'est-à-dire que la proportion de métaldéhyde peut être croissante vers l'intérieur de la matière solide entre la surface de la particule et le coeur de la particule. Dans cette variante, le taux de variation (gradient) de métaldéhyde reste positif notamment jusqu'à une zone centrale de la particule dans laquelle la proportion de métaldéhyde ne varie plus.

Avantageusement et selon l'invention, la proportion de métaldéhyde varie vers l'intérieur de la matière solide sur au moins une partie du volume de la matière solide. Avantageusement, dans certains modes de réalisation selon l'invention, la proportion de métaldéhyde varie vers l'intérieur de la matière solide uniquement sur une partie d'épaisseur de la matière solide.

Avantageusement, dans d'autres modes de réalisation de l'invention, la proportion de métaldéhyde varie de façon discontinue vers l'intérieur de la matière solide. Dans ces modes de réalisation selon l'invention, la particule selon l'invention présente une pluralité de couches de matières solides superposées, au moins deux couches consécutives superposées de matière solide étant de compositions différentes, la proportion de métaldéhyde étant distinctes entre ces deux couches consécutives et vers l'intérieur de la matière solide.

Dans ces autres modes de réalisation selon l'invention, rien n'empêche que la proportion de métaldéhyde varie dans au moins une couche de matière solide et vers l'intérieur de la matière solide.

Chacune des couches superposées -notamment toutes les couches superposées peu(ven)t présenter une épaisseur constante sur toute la périphérie de la particule. Cependant, rien n'empêche qu'au moins une des couches superposées présente une épaisseur variable dans le volume de la particule. En outre, chacune des couches superposées peut présenter une épaisseur relative distincte de l'épaisseur d'une autre couche superposée.

Avantageusement, dans ces autres modes particuliers de réalisation selon l'invention, une particule -dite particule bicouche- peut aussi présenter une couche de surface extérieure avec une proportion moyenne de métaldéhyde de la couche de surface et un coeur interne avec une proportion moyenne de métaldéhyde du coeur interne inscrit à l'intérieur de la couche de surface extérieure et enveloppé par celle-ci, la proportion moyenne de métaldéhyde de couche de surface étant supérieure par rapport à la proportion moyenne de métaldéhyde du coeur interne.

Dans ces autres modes particuliers de réalisation selon l'invention, la proportion de métaldéhyde est constante vers l'intérieur de la matière solide dans la couche de surface extérieure et dans le coeur interne, la proportion de métaldéhyde du coeur interne étant supérieure à la proportion de métaldéhyde de la couche de surface extérieure.

Selon l'invention, la proportion de metaldehyde est croissante vers l'intérieur de la matière solide. La proportion moyenne de métaldéhyde de la couche de surface est inférieure à la proportion moyenne de métaldéhyde du coeur interne. En particulier, dans ces modes de réalisation de l'invention, la proportion moyenne de métaldéhyde de la couche de surface est nulle.

Avantageusement et selon l'invention, le composé métallique est un sel métallique. Avantageusement et selon l'invention, le composé métallique est choisi dans le groupe formé de l'acétate de fer, du chlorure de fer, du phosphate de fer, du phosphate de fer et de sodium, du pyrophosphate de fer, du nitrate de fer, du sulfate de fer, du sulfate de fer et d'ammonium, des ferroprotéines, des sulfures de fer, du citrate de fer, des phosphates de glycérol et de fer (glycérophosphate de fer), du citrate de choline et de fer, du citrate d'ammonium et de fer, du fumarate de fer, du gluconate de fer, du lactate de fer, des complexes de fer et de saccharose, des complexes de fer et de fructose, des complexes de fer et de dextrose, du succinate de fer, du tartrate de fer, de l'oxalate de fer, de l'ascorbate de fer et de l'aspartate de fer.

Avantageusement et selon l'invention, le composé métallique est du phosphate de fer.

Avantageusement, dans le mode de réalisation préférentiel d'une particule molluscicide selon l'invention, au moins un composé métallique est choisi dans le groupe formé du phosphate de fer (II) ferreux et du phosphate de fer (III) ferrique. Il peut donc s'agir de phosphate de fer (II) ferreux de formule Fe₃(PO₄)₂ et de n° 14940-41-1 dans la classification du « Chemical Abstract Service, CAS ». Il peut aussi s'agir de phosphate de fer (III) ferrique de formule FePO₄-nH₂O, dans laquelle n représente le nombre de molécule d'eau associée à chaque molécule de phosphate de fer (III) ferrique. La valeur de n peut être égale à 0 ; il s'agit alors du phosphate de fer (III) ferrique anhydre (CAS 10045-86-0) ; elle peut être égale à 2 ; il s'agit alors du phosphate de fer (III) ferrique dihydraté (CAS n° 13463-10-0) ; elle peut être égale à 4 ; il s'agit alors du phosphate de fer (III) ferrique tétrahydraté (CAS n° 14940-41-1).

Le phosphate de fer (II) ferreux et/ou le phosphate de fer (III) ferrique peuvent être sous une forme amorphe ou sous une forme cristalline, c'est-à-dire présentant un signal par analyse par diffraction des rayons X. Le phosphate de fer peut être sous forme de cristaux de maille orthorhombique ou monoclinique.

Avantageusement, dans le mode de réalisation préférentiel selon l'invention, la matière solide comprend du phosphate de fer (III) ferrique à titre de composé métallique unique.

Avantageusement et selon l'invention, la matière solide comprend au moins un agent, dit agent complexant, choisi dans le groupe formé des polyacides organiques -notamment des polyacides amino-carboxyliques, de préférence des polyacides amino-acétiques, des polyacides amino-succiniques, des polyacides amino-glutariques, des polyacides amino-aspartiques-, des sels de polyacides organiques, des esters de polyacides organiques et des mélanges en toutes proportions d'au moins deux d'entre eux. En particulier, chaque agent complexant est un composé apte à moduler la disponibilité du métal du composé métallique vis-à-vis des mollusques nuisibles.

Avantageusement et selon l'invention, au moins un agent complexant est choisi dans le groupe formé de l'EDTA (acide éthylène diamine-N,N,N',N'-tétraacétique), de l'EDTA Na₂Ca (sel calcique et disodique de l'acide éthylène diamine-N,N,N',N'-tétraacétique), de l'EDDS (acide éthylène diamine-N,N'-disuccinique), du DTPA (acide diéthylène triamine-N,N,N',N',N"-pentaacétique), du DTPA Na₅ (sel pentasodique de l'acide diéthylène triamine-N,N,N',N',N"-pentaacétique), du GLDA (acide L-glutamique-N,N-diacétique), du GLDA Na₂ (sel disodique de l'acide L-glutamique-N,N-diacétique), de l'HEDTA (acide éthylènediamine-N-hydroxyéthyl-N',N'-diacétique), de l'HEDTA Na3 (sel trisodique de l'acide éthylènediamine-N-hydroxyéthyl-N',N'-diacétique), du BAPTA (acide 1,2-bis(2-aminophénoxy)éthane-N,N,N',N'-tétraacétique), du BAPTA AM (ester acétoxyméthyl de l'acide 1,2-bis(2-aminophénoxy)éthane-N,N,N',N'-tétraacétique), de l'HEIDA (acide 2-hydroxyéthylamine-N,N-diacétique), de l'HEIDA Na₂ (2-hydroxyéthylamine-N,N-diacétate de sodium), du NTA (acide nitrilo-N,N,N-triacétique), du NTA Na₃ (sel trisodique de l'acide nitrilo-N,N,N-triacétique), de l'acide (S,S) propane-1,3-diamine-N,N'-disuccinique, de l'acide triéthylène-tétraamine-hexaacétique, de l'acide 2-aminoéthanesulfonique-N,N-diacétique, de l'IDA (acide imino-N,N-diacétique), de l'HIDS (acide hydroxyimino-N,N-disuccinique), de l'HIDS Na₄ (sel tétrasodique de l'acide hydroxyimino-N,N-disuccinique), de l'ADA (acide N-(2-Acétamido)imino-N,N-diacétique), de l'IDHA (acide-N-dicarboxyéthyle-D,L-aspartique), de l'EGTA (acide éthylène glycol-bis(2-aminoéthyléther)-N,N,N',N'-tétraacétique), de l'acide (S,S)-2-hydroxy-1,3-propane-N,N'-disuccinique, de l'acide (S,S)-2-hydroxy-1,3-propane-N,N'-diglutarique, du N-cinnamoyl-n-2,3-xylylhydroxylamine, du 1,1,1-tris-(3-hydroxy-2-oxo-dihydro-1-pyridylpropoxyméthyle) éthane, du N,N-diéthyle dithio carbamate d'ammonium, du DMSA (acide dimercaptosuccinique), de l'hydroxy-diméthyl-pyridone, de la tétraméthoxy-diméthylphosphine-bipyridine, du mélange de curcumine et de piperine, de la deferoxamine, de l'acide citrique, de l'acide diéthyle-glutarique, de l'acide 8-hydroxyquinoline-5-sulfonique, de la 1-méthyl-pyrolidone du sel hémicalcique de l'acide lactobionique, du epigallocatechine-3-gallate, de l'acide aspartique diéthoxysuccinate, du EDDPA (acide éthylène-diamine-dialkyle phosphonique), du EDTMP (acide éthylène-diamine-tétraméthylène phosphonique), du DTPMP (acide diéthylène-triamine-pentaméthylène phosphonique), du DTPMP Na (sel de sodium de l'acide diéthylène-triamine-pentaméthylène phosphonique), du EDDCHA (acide éthylène-diamine-N,N'-bis(5-carboxy-2-hydroxyphényl-acétique)), du EDDHA (acide éthylène-diamine-N,N'-bis(2-hydroxyphényl-acétique)), du EDDHMA (acide ethylène-diamine-N,N'-bis(*o*-hydroxy-*p*-methylphenyl acétique), du EDDHSA (acide ethylène-diamine-N,N'-bis(*o*-hydroxy-*p*-sulfophenyl acétique), du GLUDA (acide-N,N-diacétique glutamique), du HEEDTA (acide éthylène diamine-N-hydroxyéthyl-N,N'N'-triacétique), du LED3A (acide éthylène diamine-N-laurique-N,N'N'-triacétique), du CDTA (acide cyclohexyl-1,2-dinitro-N,N,N',N'-tétraacétique), du MGDA (acide méthylglycine diacétique), du MIDA (acide méthylimino diacétique), du O-Trensox (8-hydroxy-quinoléine et de ses trimères), des AcAc (acétylacétonates), de l'hydrazone de salicylalhéhyde isonicotinoyl, de l'acide (S,S)-1,2-éthylène-diamine-diglutarique, de l'acide (S,S)-1,3-propane-diamine-diglutarique, de l'entérochéline, du EDDM (acide éthylène-diamine-dimalonique), de l'EDDT (acide éthylène-diamine-ditartrique), de l'acide glutamique, de l'acide aspartique, de l'acide glycinamide-N,N-disuccinique, de l'hydrochlorure de 1,2-diéthyl-3-hydroxypyridin-4-one, de l'acide 2-(2-(2-hydroxy-benzyl)amino)ethylamino)-2-(2-hydroxyphenyl) acétique, de l'acide 2-méthyl-3-hydroxy-4-pyridine carboxylique, de l'acide 3-hydroxy-4-pyridine carboxylique, de la 3-hydroxy-4-pyridine carboxylique, d'un alginate, d'un glycinate, de la glycine, de l'hexadentate hydroxypyridinonate, de l'hexadentate pyridinone, des lignosulfonates, des aroylhydrazones lipophiles, du calcium(II)-acétyl-acétonate, du (1S,2S)1,2-bis(2-hydroxyphenyl)ethylène, des acides benzyl-hydroxamique alginiques, du disulfonate de catéchol, du citrate de choline, des acides D-glucopyranosiduroniques, des acides aminés, de la lysine, des acides méthyl-hydroxamique alginiques, de l'acide éthylène diamine N,N'-bis(2-hydroxy-5-méthylphenyl)-N,N'-diacétique, de la porphyrine tétracyclique, du trencan, de la trishydroxy pyridone, de la desferri-exochéline, du ciclopirox olamine, de l'acide éthylène-diamine-N,N'-bis(2-hydroxy-5-méthylbenzyl)-N,N'-diacétique (HJB), des lysinates, de l'acide L-aspartique-N,N-diacétique (ASDA), du sel tétrasodique de l'acide L-aspartique-N,N-diacétique (ASDA Na₄), du LTMP, du disulfide de tétraéthylthiuram, de l'acide phytique, de la silybin, des acides gluconiques, des acides humiques, d'Exjade®, de l'acide 2-{2-[(2-hydroxybenzyl)amino]éthylamino}-2-{2-hydroxyphenyl}acétique (DCHA), de la chitine, de la résine de chélaïne, de la déferroxamine, de la D-penicillamine, du 2,3-dimercapto-1-propanol, de 3-amino-1H-1,2,3-triazole, de l'acide mélitique, de la pyridylméthylamine, de l'acide 1-hydroxyéthan-1,1-diphosphonique (HEDP) et de l'acide amino-tris(méthylène sulfonique) (ATMP).

Avantageusement et selon l'invention, au moins un composé métallique est présent dans la matière solide dans une proportion variable -notamment croissante ou décroissante- vers l'intérieur de la matière solide.

Avantageusement et selon l'invention, au moins un agent complexant est présent dans la matière solide dans une proportion variable -notamment croissante ou décroissante- vers l'intérieur de la matière solide.

Avantageusement et selon l'invention, au moins un agent complexant et au moins un composé métallique présentent des distributions respectives semblables, c'est-à-dire que leurs proportions respectives varient -notamment croissent ou décroissent- selon un même sens de variation vers l'intérieur de la matière solide.

Avantageusement et selon l'invention, le composé métallique -notamment chaque composé métallique- est(sont) présent(s) dans la matière solide avec une proportion massique moyenne comprise entre 0,1 % et 10 % -notamment de l'ordre de 2 %-. Par proportion massique moyenne de composé métallique dans la matière solide, on entend la masse de composé métallique rapportée à la masse de la matière solide correspondante.

Avantageusement et selon l'invention, le métaldéhyde est présent dans la matière solide de la particule avec une proportion massique moyenne comprise entre 0,2 % et 5 % -notamment comprise entre 0,5 % et 2 %, en particulier de l'ordre de 1 %-. Par proportion massique moyenne de métaldéhyde dans la matière solide, on entend la masse de métaldéhyde rapportée à la masse de la matière solide correspondante.

Avantageusement, la particule bicouche selon l'invention est formée d'une couche de surface extérieure et d'un coeur interne inscrit à l'intérieur de la couche de surface extérieure et enveloppé par celle-ci, ladite couche de surface extérieure et ledit coeur interne étant formés de deux matières solides présentant des proportions différentes de métaldéhyde.

Avantageusement et selon l'invention, la matière solide de la couche de surface extérieure constitue de 15 % à 50 % -notamment de l'ordre de 33 %- de la masse de la matière solide de la particule.

Une telle particule comprend donc un coeur interne en matière solide formant de 50 % à 85 % en masse de la particule et d'une couche de surface extérieure, elle aussi en matière solide, et enrobant le coeur interne et représentant entre 15 % et 50 % de la masse de la particule.

Avantageusement, dans certains modes de réalisation d'une particule bicouche selon l'invention, la proportion de métaldéhyde de la couche de surface extérieure est inférieure à la proportion de métaldéhyde du coeur interne.

Avantageusement, dans une particule bicouche selon ces modes de réalisation, le composé métallique -notamment chaque composé métallique- est(sont) présent(s) dans la matière solide de la couche de surface extérieure avec une proportion massique moyenne comprise entre 1 % et 10 % -notamment comprise entre 3 % et 8 %, particulièrement de l'ordre de 6 %-.

Avantageusement, dans une particule bicouche selon ces modes de réalisation, le composé métallique -notamment chaque composé métallique- est(sont) présent(s) dans la matière solide du coeur interne de la particule avec une proportion massique sensiblement nulle.

Dans ces modes de réalisation d'une particule bicouche selon l'invention, le coeur interne de la particule est sensiblement exempt de composé métallique.

Cependant, rien n'empêche que le composé métallique -notamment chaque composé métallique- soi(en)t présent(s) dans la matière solide du coeur interne de la particule avec une proportion massique supérieure à la proportion massique de composé métallique dans la couche de surface extérieure.

Avantageusement, dans une particule bicouche selon ces modes de réalisation, le métaldéhyde est présent dans la matière solide du coeur interne de la particule avec une proportion massique moyenne supérieure à 1 % -notamment comprise entre 1 % et 5 %, en particulier entre 1 % et 2 %, de préférence de l'ordre de 1,5 %-. Une telle proportion de métaldéhyde est suffisante pour limiter la consommation de la particule par un mollusque nuisible, mais aussi pour procurer un effet molluscicide synergique avec le(s) composé(s) métallique(s) et, le cas échéant, en combinaison l'(les) agent(s) complexant(s).

Avantageusement, dans une particule bicouche selon ces modes de réalisation, le métaldéhyde est présent dans la matière solide de la couche de surface extérieure de la particule avec une proportion massique inférieure à 0,2 %, notamment dans une proportion massique détectable seulement à titre de trace. Avantageusement, selon ces modes de réalisation, la proportion massique de métaldéhyde peut être nulle.

Avantageusement, dans une particule bicouche selon ces modes de réalisation de l'invention, la couche de surface extérieure est exempte de métaldéhyde. La proportion massique de métaldéhyde en surface de la particule est nulle. Ainsi, les mollusques nuisibles ingérant une partie de matière solide de surface extérieure de la particule selon l'invention, n'ingèrent pas de métaldéhyde lors de la phase initiale de consommation par ingestion de la matière solide de ladite particule.

Avantageusement, une particule bicouche selon ces modes de réalisation de l'invention est formée :
- la couche de surface extérieure comprend du phosphate de fer et de l'acide éthylène diamine-N,N,N',N'-tétraacétique (EDTA), ladite couche de surface extérieure étant exempte de métaldéhyde, et ;
- le coeur interne comprend du métaldéhyde et est exempt de phosphate de fer et l'acide éthylène diamine-N,N,N',N'-tétraacétique (EDTA).

Avantageusement, dans ces modes de réalisation d'une particule bicouche selon l'invention :
- le phosphate de fer est présent dans la couche de surface extérieure avec une proportion massique de l'ordre de 6 % ;
- le métaldéhyde est présent dans le coeur interne avec une proportion massique de l'ordre de 1,5 %.

Avantageusement, dans une particule bicouche selon tous les modes de réalisation de l'invention, la couche de surface extérieure et/ou le coeur interne comprend (comprennent) une quantité d'au moins un excipient comestible pour des mollusques nuisibles. Ledit excipient comestible peut être identique ou différent dans la couche de surface extérieure et le coeur interne.

L'invention vise en outre un appât molluscicide à l'état divisé comprenant au moins une particule molluscicide selon l'invention.

Avantageusement et selon l'invention, l'appât est sous forme d'un solide à l'état divisé. L'appât peut être sous la forme d'une composition de particules selon l'invention. Avantageusement et selon l'invention, chaque particule a une masse moyenne comprise entre 5 mg et 500 mg.

L'invention vise aussi l'utilisation d'au moins une particule selon l'invention à titre d'appât molluscicide.

L'invention vise en particulier l'utilisation d'un appât selon l'invention pour lutter contre des mollusques -notamment des gastéropodes-nuisibles choisis dans le groupe formé :
- des limaces -notamment de la famille des *Limacidae*, de la famille des *Arionidae*, de la famille des *Milacidae*, plus particulièrement de l'espèce *Deroceras reticulatum*, de l'espèce *Arion hortensis,* de l'espèce *Arion ater agg*, de l'espèce *Milax gagates*-,
- des escargots terrestres des genres *Helix*, *Cernuel*, *Theba*, *Achatina*, -plus particulièrement de l'espèce *Helix aspersa*, de l'espèce *Cernuella virgata* et de l'espèce *Theba pisana*-, et ;
- des escargots aquatiques des genres *Biomphalaria*, *Lynea*, *Pomacea* -notamment *Pomacea canaliculata*-.

L'invention s'étend par ailleurs à un procédé de lutte contre des mollusques nuisibles dans lequel on met à disposition de mollusques nuisibles une quantité d'appât selon l'invention.

Avantageusement et selon l'invention, la quantité d'appât correspond à une dose homologuée d'application l'ordre de 5 Kg/ha en agriculture correspondant à une masse de phosphate de fer répartie par hectare de culture de l'ordre de 150 g.

L'invention concerne également une particule, un appât molluscicide comprenant au moins une telle particule, l'utilisation d'une telle particule à titre d'appât molluscicide et un procédé de lutte contre des mollusques nuisibles caractérisés en combinaison par tout ou partie des caractéristiques mentionnées ci-dessus ou ci-après.

D'autres buts, caractéristiques et avantages de l'invention apparaîtront à la lecture de la description suivante et des exemples non limitatifs et donnés uniquement à titre d'illustration de l'invention.

### Confection des appâts par enrobage

On forme des particules « bicouche » selon l'invention par un procédé en deux étapes dans lequel on forme d'abord un coeur solide, puis on enrobe ledit coeur solide avec une composition d'enrobage pour former les particules d'appât selon l'invention.

On forme une telle particule « bicouche » globulaire, notamment sensiblement sphérique, selon l'invention par tout procédé adapté, par exemple par enrobage en mode continu ou en mode discontinu d'un nucléus formant un coeur de la particule avec des compositions de proportions différentes de métaldéhyde. En particulier, on obtient, par exemple, une telle particule selon l'invention par enrobage d'un nucléus formant le coeur de la particule et comprenant du métaldéhyde avec une composition exempte de métaldéhyde et précurseur de la matière solide de la couche de surface extérieure de la particule.
1) Formation du coeur solide par :
   - pesée des différents ingrédients précurseurs du coeur solide, puis ;
   - mélange des ingrédients au moyen d'un mélangeur à ruban ou d'un mélangeur intensif ;
   - incorporation d'eau sous forme vapeur ou sous forme liquide et/ou de paraffine en quantité suffisante pour former une pâte homogène continue ;
   - compression/extrusion de la pâte au travers d'une filière d'un extrudeur/thermocuiseur ;
   - fragmentation des brins d'appât obtenus de façon à former des granulés d'appât unitaires et individualisés ;
   - le cas échéant, stabilisation des granulés par refroidissement et séchage en vue de leur stockage à température ambiante.
2) Enrobage du coeur solide
   - pesée des différents ingrédients de la couche d'enrobage, puis ;
   - mélange des ingrédients au moyen d'un mélangeur à ruban ou d'un mélangeur intensif ;
   - mise en place des particules formant le coeur solide dans un malaxeur, puis ;
   - sous malaxage, ajouter une quantité d'eau de façon à mouiller la surface extérieure des coeurs solides et une quantité des ingrédients de la couche d'enrobage sous forme de poudre de façon à obtenir l'adhésion de la poudre en surface du coeur solide. On réalise cette étape dans un dispositif d'enrobage connus pour leur utilisation dans l'enrobage de préparations alimentaires ou de semences en agriculture. On reproduit cette étape d'enrobage jusqu'à obtenir la structure d'appât recherchée, puis ;
   - stabilisation des particules d'appât par séchage adapté pour permettre uun stockage des appâts à température ambiante.

En variante, on utilise un nucléus de nature organique ou minérale, sur lequel on applique par malaxage une première couche comprenant par exemple du métaldéhyde, puis une deuxième couche comprenant du phosphate de fer. Après séchage, on obtient un appât formé d'un nucléus, d'une première couche interne comprenant du métaldéhyde et une couche de surface extérieure comprenant du phosphate de fer.

### Confection des appâts par co-extrusion

On obtient une particule « bicouche » de forme cylindrique selon l'invention par co-extrusion d'un fil composite formé :
- d'un coeur interne obtenu à partir d'une composition présentant une première proportion de métaldéhyde, et ;
- d'une couche de surface extérieure obtenue à partir d'une composition présentant une deuxième proportion de métaldéhyde, différente -inférieure ou supérieure- de la première proportion, et enrobant le coeur interne,
suivie d'une étape de tronçonnage du fil composite pour former des particules cylindriques en forme de bâtonnets ou granulés.

À titre d'exemple, le coeur interne peut être formé à partir d'une composition présentant une première proportion non nulle de métaldéhyde et la couche de surface extérieure peut être formée à partir d'une composition présentant une deuxième proportion de métaldéhyde inférieure -notamment nulle- à la première proportion.

On forme de telles particules «bicouche» selon l'invention par formation et superposition du coeur et de la couche de surface par co-extrusion (de préférence dans des extrudeurs bi-vis) en une étape à partir de deux compositions pâteuses précurseurs respectivement du coeur interne et de la couche de surface extérieure.
- pesée des ingrédients précurseurs du coeur solide et de la couche d'enrobage, puis ;
- mélange des ingrédients précurseurs du coeur solide au moyen d'un mélangeur à ruban ou d'un mélangeur intensif et incorporation d'eau sous forme vapeur ou sous forme liquide et/ou de paraffine en quantité suffisante pour former une pâte homogène continue ;
- mélange des ingrédients précurseurs de la couche d'enrobage au moyen d'un mélangeur à ruban ou d'un mélangeur intensif et incorporation d'eau sous forme vapeur ou sous forme liquide et/ou de paraffine en quantité suffisante pour former une pâte homogène continue ;
- co-extrusion des pâtes précurseurs du coeur et de la couche d'enrobage au travers d'une filière de co-extrusion à l'aide de deux extrudeurs/thermocuiseurs ;
- fragmentation des brins d'appât obtenus de façon à former des granulés d'appât unitaires et individualisés ;
- stabilisation des granulés par refroidissement et séchage en vue de leur stockage à température ambiante.

### Populations de limaces

Des limaces sauvages adultes et de taille homogène sont collectées sur des parcelles agricoles favorables au développement de leur population. Ces limaces sauvages sont maintenues dans des conditions d'élevage (température, humidité, éclairage, ventilation et alimentation végétale) favorables à leur développement jusqu'à la réalisation des essais.

### Mortalité sur limaces en conditions contrôlées

25 boites d'essai contenant chacune une limace sont placées dans une enceinte climatique maintenue à une température comprise entre 10°C et 20°C, sous atmosphère contrôlée d'humidité relative comprise entre 60 % et 90% et sous éclairage périodique. On place un granulé d'appât dans chaque boite d'essai. On dénombre au cours du temps les limaces mortes 3 et 8 jours après la mise en place de l'appât dans la boite d'essai. On note la quantité d'appât consommé par la limace dans chaque boite. On calcule le taux moyen de mortalité cumulé (TMMC, %) par dénombrement du nombre de limaces tuées sur la période (en nombre de jours) rapporté aux 25 limaces de départ.

### Mortalité sur limaces en conditions semi-contrôlées

Les essais en conditions semi-contrôlées sont réalisés dans des cages extérieures selon le protocole CEB n° 48. On place 25 limaces dans une cage grillagée de forme carrée couvrant une surface au sol de 1 m². La terre du sol est travaillée de façon à présenter une surface sensiblement plane et tassée de façon à éviter l'enfouissement des limaces. On repique de 10 à 20 plants de salade dans la terre de chaque cage. Au centre de chaque cage, on dispose une tuile formant un refuge pour les limaces. On répartit de manière homogène sur la surface au sol de la cage une quantité d'appât correspondant à la dose d'appât appliquée par hectare. Par exemple, on applique 0,5 g d'appât par cage correspondant à une dose d'appât appliqué de 5 Kg/ha ou 0,7 g d'appât par cage correspondant à une dose d'appât appliqué de 7 Kg/ha. On dénombre les limaces mortes périodiquement après la mise en place de l'appât.

### EXEMPLE 1 - Essais comparatifs de la toxicité d'appâts sur limaces grises (Deroceras reticulatum) en conditions contrôlées

Des essais sur limaces grises sont réalisés avec les appâts suivants :
- appât exempt de matière active (« contrôle »),
- appâts contrôle comprenant du métaldéhyde dans une proportion massique de 4 % (« ME 4 % ») ou de 2,5 % (« ME 2,5 % »). Les appâts « ME 4 % » et « ME 2,5 % » présentent du métaldéhyde distribué de façon homogène dans tout le volume de la matière solide des particules de l'appât ;
- appât (« PFe/EDTA ») contrôle comprenant du phosphate de fer dans une proportion massique de 3 % et de l'EDTA (acide éthylène diamine-N,N,N',N'-tétraacétique) dans une proportion équimolaire avec le fer du phosphate de fer. L'appât « PFe/EDTA » présente du phosphate de fer et de l'EDTA distribués de façon homogène dans tout le volume de la matière solide des particules de l'appât ;
- appâts « PFe 1 %/EDTA/ME 1 % » et « PFe 2 %/EDTA/ME 1 % » contrôles comprenant du phosphate de fer en proportion massique de 1 % et 2 % respectivement, de l'EDTA (acide éthylène diamine-N,N,N',N'-tétraacétique) dans une proportion équimolaire avec le fer du phosphate de fer et du métaldéhyde dans une proportion massique de 1 %. Les appâts « PFe 1 %/EDTA/ME 1 % » et « PFe 2 %/EDTA /ME 1 % » présentent du phosphate de fer, de l'EDTA et du métaldéhyde distribués de façon homogène dans tout le volume de la matière solide des particules de l'appât.

Les essais ci-dessus sont réalisés à titre d'essais comparatifs :
d'un essai réalisé avec un appât bicouche (BC PFe 2 %/EDTA/ME 1 %) selon l'invention comprenant du phosphate de fer dans une proportion massique de 2 %, de l'EDTA dans une proportion équimolaire avec le fer du phosphate de fer et du métaldéhyde dans une proportion massique de 1 % et formé d'un coeur interne comprenant le métaldéhyde et d'une couche de surface extérieure comprenant le phosphate de fer et l'EDTA.

L'appât bicouche « BC PFe 2 %/EDTA/ME 1 % » selon l'invention présente un coeur interne formant de l'ordre des 2/3 du volume de l'appât et comprenant le métaldéhyde de l'appât et une couche de surface extérieure formant de l'ordre de 1/3 du volume de l'appât et comprenant le phosphate de fer et l'EDTA. La proportion massique de phosphate de fer dans la couche de surface extérieure est alors de l'ordre de 6 %, l'EDTA étant présent dans la couche de surface extérieure en proportion équimolaire par rapport au fer du phosphate de fer. La proportion massique de métaldéhyde dans le coeur interne est de l'ordre de 1,5 %.

Les compositions globales des appâts décrits ci-dessus sont données au tableau 1 ci-après dans lequel les pourcentages sont des pourcentages en masse rapportés à la masse totale de l'appât.

**Tableau 1**

| Appât | Composition de l'appât | | | |
|---|---|---|---|---|
| | Farine de blé | Métaldéhyde | Phosphate de fer | Fe/EDTA (mole) |
| Contrôle | 100 % | 0 | 0 | 0 |
| ME4 % | 96 % | 4 % | 0 | 0 |
| ME 2,5 % | 97,5 % | 2,5 % | 0 | 0 |
| PFe/EDTA | 90,9 % | 0 | 3 % | 1 |
| PFe 1 %/EDTA/ME 1 % | 96 % | 1 % | 1 % | 1 |
| PFe 2 %/EDTA ME 1 % | 93 % | 1 % | 2 % | 1 |
| BC PFe 2 %/EDTA/ME 1 % | 96 % | 1 % | 1 % | 1 |

Les résultats des essais de toxicité réalisés trois fois sont donnés au tableau 2 ci-après dans lequel TMMC, % représente le taux de mortalité moyen cumulé des limaces grises et AC représente la valeur moyenne de la masse (en milligramme) d'appât consommé par chaque limace.

| Matière active | Durée de l'essai | | |
|---|---|---|---|
| | 3 jours | 8 jours | |
| | TMMC, % | TMMC, % | AC, mg |
| Contrôle | 0 | 3 | 18 |
| ME4 % | 10 | 81 | 6,72 |
| ME 2,5 % | 6 | 72 | 7,57 |
| PFe/EDTA | 58 | 92 | 9,97 |
| PFe 1 %/EDTA/ME 1 % | 28 | 79 | 4,43 |
| PFe 2 %/EDTA/ME 1 % | 64 | 91 | 4,21 |
| BC PFe 2 %/EDTA/ME 1 % | 72 | 93 | 4,11 |

Tableau 2 : PFe = phosphate de fer ; ME = métaldéhyde ; EDTA = acide éthylène diamine N,N,N',N'-tétraacétique ; les pourcentages sont des pourcentages en masse.

On observe avec l'appât bicouche selon l'invention, une valeur de TMMC, % (93 %) à 3 jours et à 8 jours qui est supérieure à la valeur TMMC, % (92 %) observé avec l'appât PFe/EDTA, mais avec une quantité d'appât selon l'invention consommé par les limaces (4,11 mg) qui est 2,4 fois plus faible que la quantité (9,97 mg) de cet appât contrôle. Un appât « bicouche » selon l'invention présente une efficacité à 3 jours et à 8 jours qui est améliorée pour une quantité d'appât consommé réduite.

### EXEMPLE 2 - Toxicité sur limaces noires (Arion hortensis) en conditions contrôlées

Les résultats d'essais de toxicité réalisés trois fois en conditions contrôlées sont donnés au tableau 2 ci-après dans lequel TMMC, % représente le taux de mortalité moyen cumulé des limaces noires et AC représente la valeur moyenne de la masse (en milligramme) d'appât consommé par chaque limace noire.

**Tableau 3**

| Matière active dans l'appât | Durée de l'essai | | |
|---|---|---|---|
| | 3 jours | 8 jours | |
| | TMMC, % | TMMC, % | AC, mg |
| Contrôle | 0 | 1 | 18,18 |
| ME 4% | 12 | 78 | 9,16 |
| ME 2,5 % | 10 | 68 | 10,50 |
| PFe/EDT A | 14 | 80 | 9,21 |
| PFe 2 %/EDTA/ME 1 % | 11 | 79 | 7,95 |
| BC PFe 2 %/EDTA/ME 1 % | 27 | 91 | 7,57 |

On obtient, par traitement des limaces avec l'appât selon l'invention (BC PFe 2 %/EDTA/ME 1 %), des valeurs de TMMC à 3 jours et à 8 jours qui sont supérieures (27 %, 91 %) aux valeurs du TMMC à 3 jours et à 8 jours obtenues avec l'appât PFe 2 %/EDTA/ME 1 % (11 %, 79 %), avec l'appât PFe/EDTA (14 %, 80 %), et avec les appâts ME 4 % (12 %, 78 %) ou ME 2,5 % (10 %, 68 %. En outre, une telle valeur TMMC améliorée est obtenue avec une quantité (7,57 mg) moyenne d'appât consommé (AC) par chaque limace qui est plus faible que la quantité (7,95 mg) d'appât PFe 2 %/EDTA/ME 1 %, que la quantité (9,21 mg) d'appât PFe/EDTA, que la quantité (10,50 mg) d'appât ME 2,5 % et que la quantité (9,16 mg) d'appât ME 4 % consommés par chaque limace.

L'appât « bicouche » selon l'invention présente une efficacité à 3 jours et à 8 jours qui est améliorée pour une quantité d'appât consommé réduite.

### EXEMPLE 3 - Toxicité sur limaces grises en conditions semi-contrôlées

Les résultats des essais répétés cinq fois sont donnés au tableau 4 ci-après dans lequel TMMC, % représente le taux de mortalité moyen cumulé et MA (en g/ha) représente la masse (en gramme) de matière active (phosphate de fer ou métaldéhyde ou phosphate de fer et métaldéhyde) appliquée par hectare de surface traitée.

**Tableau 4 (nd : non défini)**

| Matière active | MA, g/ha | Durée du traitement | | | |
|---|---|---|---|---|---|
| | | 4 jours | | 8 jours | |
| | | TMMC, % | Ratio | TMMC, % | Ratio |
| Contrôle | 0 | 8,8 | nd | 18 | nd |
| ME 4 % | 200 | 61,6 | 0,308 | 73 | 0,365 |
| ME 2,5 % | 125 | 58 | 0,464 | 70 | 0,56 |
| PFe/EDT A | 210 | 68,4 | 0,326 | 82 | 0,39 |
| PFe 2 %/EDTA/ME 1 % | 150 | 65 | 0,433 | 73 | 0,49 |
| BC PFe 2 %/EDTA/ME 1 % | 150 | 73,4 | 0,489 | 82 | 0,547 |

On obtient par traitement de limaces avec l'appât selon l'invention (« BC PFe 2 %/EDTA/ME 1 % »), un taux de mortalité moyen cumulé (TMMC, %) après 4 jours et 8 jours de traitement qui est supérieur ou égal (73,5 % et 82 % respectivement) au TMMC observé avec l'appât « PFe 2 %/EDTA/ME 1 % » (65 % et 73 % respectivement), au TMMC observé avec l'appât « PFe/EDTA » (68,4 % et 82 % respectivement), mais avec une quantité (150 g/ha) de matière active (MA) appliquée qui est plus faible que la quantité (210 g/ha) de matière active de l'appât « PFe/EDTA ». Les colonnes « Ratio » du tableau 4 présentent les valeurs du TMMC, % rapporté à la quantité de matière active (MA) appliquée et traduisant l'efficacité améliorée de l'appât selon l'invention. Ces résultats démontrent l'avantage en terme d'efficacité procuré par l'appât « BC PFe 2 %/EDTA/ME 1 % » selon l'invention par rapport à un appât dans lequel la(les) matière(s) active(s) présente(nt) une distribution homogène.

### EXEMPLE 4 - Toxicité sur limaces grises en conditions semi-contrôlées

Les résultats des essais de toxicité sur limaces en conditions semi-contrôlées répétés trois fois sont donnés au tableau 5 ci-après dans lequel TMMC, % représente le taux de mortalité moyen cumulé et MA (en g/ha) représente la masse (en gramme) de matière active (phosphate de fer ou métaldéhyde ou phosphate de fer et métaldéhyde) appliquée par hectare de surface traitée.

**Tableau 5 (nd : non défini)**

| Matière active dans l'appât | MA, g/ha | Durée du traitement | | | |
|---|---|---|---|---|---|
| | | 4 jours | | 8 jours | |
| | | TMMC, % | Ratio | TMMC, % | Ratio |
| Contrôle | 0 | 2 | nd | 6 | nd |
| PFe/EDT A | 210 | 57 | 0,271 | 82 | 0,39 |
| PFe 2 %/EDTA/ME 1 % | 150 | 69 | 0,46 | 82 | 0,55 |
| BC PFe 2 %/EDTA/ME 1 % | 150 | 73 | 0,487 | 84 | 0,56 |

On obtient par traitement de limaces avec l'appât selon l'invention « BC PFe 2 %/EDTA/ME 1 % » des valeurs TMMC à 4 jours et à 8 jours qui sont supérieures (73 % et 84 % respectivement) aux valeurs TMMC observées avec l'appât homogène « PFe 2 %/EDTA/ME 1 % » (69 % et 82 % respectivement), aux valeurs TMMC observées avec l'appât « PFe/EDTA » (57 % et 82 % respectivement). Ces valeurs de TMMC améliorées sont en outre obtenues avec des quantités de matière active appliquée (150 g/ha) qui est plus faible que la quantité de matière active (210 g/ha) appliquée avec l'appât « PFe/EDTA ». Les colonnes « Ratio » du tableau 5 présentent les valeurs du rapport entre le taux de mortalité moyen cumulé (en %) et la quantité de matière active appliquée traduisant l'efficacité de l'appât. Ces résultats démontrent l'avantage en termes d'efficacité procuré par un appât « bicouche » selon l'invention.

### EXEMPLE 5 - Toxicité sur limaces noires en conditions semi-contrôlées

Les résultats des essais de toxicité répétés deux fois sont donnés au tableau 6 ci-après dans lequel TMMC, % représente le taux de mortalité moyen cumulé et MA (en g/ha) représente la masse (en gramme) de matière active (phosphate de fer ou métaldéhyde ou phosphate de fer et métaldéhyde) appliquée par hectare de surface traitée.

**Tableau 6 (nd : non défini)**

| Matière active dans l'appât | MA, g/ha | Durée du traitement | | | |
|---|---|---|---|---|---|
| | | 4 jours | | 8 jours | |
| | | TMMC, % | Ratio | TMMC, % | Ratio |
| Contrôle | 0 | 2 | nd | 3 | nd |
| PFe/EDT A | 210 | 24 | 0,11 | 61 | 0,29 |
| PFe 2 %/EDTA/ME 1 % | 150 | 53 | 0,35 | 72 | 0,48 |
| BC PFe 2 %/EDTA/ME 1 % | 150 | 60 | 0,40 | 76 | 0,51 |

On obtient lors de traitement de limaces noires avec l'appât « BC PFe 2 %/EDTA/ME 1 % » selon l'invention, des valeurs de TMMC à 4 jours et à 8 jours qui sont supérieures (60 % et 76 % respectivement) aux valeurs de TMMC observées avec l'appât homogène « PFe 2 %/EDTA/ME 1 % » (53 % et 72 % respectivement), avec l'appât « PFe/EDTA » (24 % et 61 % respectivement). Une telle amélioration de l'efficacité molluscicide est en outre obtenue avec une quantité d'appât selon l'invention appliqué (150 g/ha) qui est plus faible que la quantité (210 g/ha) d'appât « PFe/EDTA ».

Les colonnes « Ratio » du tableau 6 présentent les valeurs du TMMC, % rapporté à la masse de matière active (MA) appliquée et traduisant l'efficacité de l'appât. Ces résultats démontrent l'avantage procuré par un appât bicouche selon l'invention sur le traitement de mollusques nuisibles.

## Revendications

1. Particule molluscicide formée d'une matière solide comprenant au moins un composé, dit composé métallique, comprenant au moins un métal choisi dans le groupe formé du fer, du cuivre, du zinc et de l'aluminium, ladite matière solide étant apte à faire office de poison par ingestion pour des mollusques nuisibles, **caractérisée en ce que** :
- la matière solide comprend du métaldéhyde dans une proportion variable vers l'intérieur de ladite matière solide, et **en ce que** ;
- la proportion de métaldéhyde est croissante vers l'intérieur de la matière solide.

2. Particule selon la revendication 1, **caractérisée en ce que** la proportion du métaldéhyde varie de façon continue vers l'intérieur de la matière solide.

3. Particule selon la revendication 1, **caractérisée en ce que** la proportion du métaldéhyde varie de façon discontinue vers l'intérieur de la matière solide.

4. Particule selon l'une des revendications 1 à 3, **caractérisée en ce qu'**elle est de forme sensiblement sphérique et **en ce que** ladite proportion varie selon toute direction radiale de la particule vers l'intérieur de la matière solide.

5. Particule selon l'une des revendications 1 à 4, **caractérisée en ce que** le composé métallique est du phosphate de fer.

6. Particule selon l'une des revendications 1 à 5, **caractérisée en ce que** la matière solide comprend au moins un agent, dit agent complexant, choisi dans le groupe formé des polyacides organiques, des sels de polyacide organique, des esters de polyacide organique et des mélanges en toutes proportions d'au moins deux d'entre eux.

7. Particule selon l'une des revendications 1 à 6, **caractérisée en ce qu'**elle est formée d'une couche de surface extérieure et d'un coeur interne inscrit à l'intérieur de la couche de surface extérieure et enveloppé par celle-ci, ladite couche de surface extérieure et ledit coeur interne étant formés de deux matières solides présentant des proportions différentes de métaldéhyde, la proportion de métaldéhyde de ladite couche de surface extérieure étant inférieure à la proportion de métaldéhyde dudit coeur interne.

8. Particule selon la revendication 7, **caractérisée en ce que** :
- la couche de surface extérieure comprend du phosphate de fer et de l'acide éthylène diamine-N,N,N',N'-tétraacétique (EDTA), ladite couche de surface extérieure étant exempte de métaldéhyde, et ;
- le coeur interne comprend le métaldéhyde et est exempt de phosphate de fer et d'acide éthylène diamine-N,N,N',N'-tétraacétique (EDTA).

9. Particule selon la revendication 8, **caractérisée en ce que** le phosphate de fer est présent dans la couche de surface extérieure avec une proportion massique de l'ordre de 6 %, et le métaldéhyde est présent dans le coeur interne avec une proportion massique de l'ordre de 1,5 %.

10. Appât molluscicide solide à l'état divisé comprenant au moins une particule molluscicide selon l'une des revendications 1 à 9.

11. Utilisation d'au moins une particule selon l'une des revendications 1 à 9 à titre d'appât molluscicide.

12. Procédé de lutte contre des mollusques nuisibles dans lequel on met à disposition de mollusques nuisibles une quantité d'appât selon la revendication 10.

## Patentansprüche

1. Molluskizides Partikel, das aus einem festen Stoff gebildet ist, der mindestens eine Verbindung, Metallverbindung genannt, umfasst, welche mindestens ein Metall umfasst, ausgewählt aus der Gruppe, die von Eisen, Kupfer, Zink und Aluminium gebildet wird, wobei der feste Stoff dazu in der Lage ist, als Fraßgift für schädliche Mollusken zu dienen, **dadurch gekennzeichnet, dass**:
- der feste Stoff Metaldehyd in einem Anteil umfasst, der zum Inneren des festen Stoffs hin veränderlich ist, und dadurch, dass;
- der Metaldehyd-Anteil zum Inneren des festen Stoffs hin zunimmt.

2. Partikel nach Anspruch 1, **dadurch gekennzeichnet, dass** sich der Anteil des Metaldehyds zum Inneren des festen Stoffs hin kontinuierlich verändert.

3. Partikel nach Anspruch 1, **dadurch gekennzeichnet, dass** sich der Anteil des Metaldehyds zum Inneren des festen Stoffs hin diskontinuierlich verändert.

4. Partikel nach einem der Ansprüche 1 bis 3, **dadurch gekennzeichnet, dass** es von im Wesentlichen kugelförmiger Form ist, und dadurch, dass sich der Anteil in jeder radialen Richtung des Partikels zum Inneren des festen Stoffs hin verändert.

5. Partikel nach einem der Ansprüche 1 bis 4, **dadurch gekennzeichnet, dass** die Metallverbindung Eisenphosphat ist.

6. Partikel nach einem der Ansprüche 1 bis 5, **dadurch gekennzeichnet, dass** der feste Stoff mindestens ein Mittel, Komplexierungsmittel genannt, umfasst, ausgewählt aus der Gruppe, die von organischen Polysäuren, Salzen von organischer Polysäure, Estern von organischer Polysäure und Mischungen in beliebigen Anteilen von mindestens zwei davon gebildet wird.

7. Partikel nach einem der Ansprüche 1 bis 6, **dadurch gekennzeichnet, dass** es von einer äußeren Oberflächenschicht und einem Innenkern gebildet wird, der sich in das Innere der äußeren Oberflächenschicht einfügt und von derselben umhüllt wird, wobei die äußere Oberflächenschicht und der Innenkern von zwei festen Stoffen gebildet werden, die unterschiedliche Metaldehyd-Anteile aufweisen, wobei der Metaldehyd-Anteil der äußeren Oberflächenschicht kleiner ist als der Metaldehyd-Anteil des Innenkerns.

8. Partikel nach Anspruch 7, **dadurch gekennzeichnet, dass**:
- die äußere Oberflächenschicht Eisenphosphat und Ethylendiamin-N,N,N',N'-tetraessigsäure (EDTA) umfasst, wobei die äußere Oberflächenschicht frei von Metaldehyd ist, und;
- der Innenkern das Metaldehyd umfasst und frei von Eisenphosphat und Ethylendiamin-N,N,N',N'-tetraessigsäure (EDTA) ist.

9. Partikel nach Anspruch 8, **dadurch gekennzeichnet, dass** das Eisenphosphat in der äußeren Oberflächenschicht mit einem Massenanteil in der Größenordnung von 6 % vorliegt, und das Metaldehyd im Innenkern mit einem Massenanteil in der Größenordnung von 1,5 % vorliegt.

10. Fester Molluskenköder in unterteiltem Zustand, der mindestens ein molluskizides Partikel nach einem der Ansprüche 1 bis 9 umfasst.

11. Verwendung von mindestens einem Partikel nach einem der Ansprüche 1 bis 9 als Molluskenköder.

12. Verfahren zur Bekämpfung von schädlichen Mollusken, wobei schädlichen Mollusken eine Menge eines Köders nach Anspruch 10 zur Verfügung gestellt wird.

## Claims

1. Molluscicidal particle formed from a solid material comprising at least one compound, a so-called metallic compound, comprising at least one metal selected from the group consisting of iron, copper, zinc and aluminium, said solid material able to be used as an ingested poison for harmful molluscs, **characterised in that**:
- the solid material comprises metaldehyde in a proportion which can vary towards the interior of said solid material, and **in that**;
- the proportion of metaldehyde increases towards the interior of the solid material.

2. Particle according to claim 1, **characterised in that** the proportion of the metaldehyde varies continuously towards the interior of the solid material.

3. Particle according to claim 1, **characterised in that** the proportion of the metaldehyde varies discontinuously towards the interior of the solid material.

4. Particle according to one of claims 1 to 3, **characterised in that** it has a substantially spherical shape and **in that** said proportion varies according to any radial direction of the particle towards the interior of the solid material.

5. Particle according to one of claims 1 to 4, **characterised in that** the metallic compound is iron phosphate.

6. Particle according to one of claims 1 to 5, **characterised in that** the solid material comprises at least one agent, a so-called complexing agent, selected in the group comprised of organic polyacids, organic polyacid salts, organic polyacid esters and mixtures in any proportions of at least two of them.

7. Particle according to one of claims 1 to 6, **characterised in that** it is formed from an outer surface layer and from an inner core inscribed inside the outer surface layer and surrounded by the latter, said outer surface layer and said inner core being formed from two solid materials that have different proportions of metaldehyde, with the proportion of metaldehyde of said outer surface layer being less than the proportion of metaldehyde of said inner core.

8. Particle according to claim 7, **characterised in that**:
- the outer surface layer comprises iron phosphate and ethylene-diamine-N,N,N',N'-tetra-acetic acid (EDTA), said outer surface layer being free of metaldehyde, and;
- the inner core comprises metaldehyde and is free of iron phosphate and of ethylene-diamine-N,N,N',N'-tetra-acetic acid (EDTA).

9. Particle according to claim 8, **characterised in that** the iron phosphate is present in the outer surface layer with a mass proportion of about 6%, and the metaldehyde is present in the inner core with a mass proportion of about 1.5%.

10. Solid molluscicidal bait in the divided state comprising at least one molluscicidal particle according to one of claims 1 to 9.

11. Use of at least one particle according to one of claims 1 to 9 as a molluscicidal bait.

12. Method for controlling harmful molluscs wherein a quantity of bait is made available to harmful molluscs according to claim 10.
